# EUROPEAN PATENT SPECIFICATION

(11) **EP 4 585 711 B1**
(45) Date of publication and mention of the grant of the patent: **25.11.2026**
(21) Application number: 23939572.6
(22) Date of filing: 30.05.2023
(51) Int. Cl.: C22C 29/08, B23B 27/14, B22F 5/00, C22C 1/051

(54) **CEMENTED CARBIDE AND CUTTING TOOL**
HARTMETALL UND SCHNEIDWERKZEUG
CARBURE CÉMENTÉ ET OUTIL DE COUPE

(43) Date of publication of application: 16.07.2025
(73) Proprietor: Sumitomo Electric Hardmetal Corp., Itami-shi, Hyogo 664-0016 (JP)
(72) Inventor: YAMAKAWA, Takahiro, Itami-shi, Hyogo 664-0016 (JP); YAMANISHI, Takato, Itami-shi, Hyogo 664-0016 (JP); HIKIJI, Masahito, Itami-shi, Hyogo 664-0016 (JP)
(74) Representative: Boult Wade Tennant LLP
(86) International application number: PCT/JP2023/020055
(87) International publication number: WO 2024/247093

(56) References cited:
- JP-A- 2010 248 560
- JP-A- 2010 248 560
- JP-A- 2010 248 561
- JP-A- 2010 248 561
- JP-A- 2017 148 895
- JP-A- 2020 094 277
- JP-A- 2020 094 277
- JP-A- 2022 158 173
- JP-A- 2022 158 173
- US-A1- 2007 227 298

## Description

### TECHNICAL FIELD

The present invention relates to a cemented carbide and a cutting tool.

### BACKGROUND ART

Conventionally, cemented carbides each including a hard phase composed mainly of tungsten carbide (WC) and a binder phase composed mainly of an iron group element have been used as a material for cutting tools. A cemented carbide disclosed in PTL 1 includes, as a hard phase, a hard phase composed mainly of WC as well as a phase composed of at least one composite compound selected from carbides, nitrides, and carbonitrides containing tungsten (W) and a metal element other than W, and particles of WC and particles of the composite compound are bound together so as to improve the chipping resistance. Further cemented carbides are disclosed in JP 2020 094277 A, JP 2010 248561 A, JP 2010 248560 A and JP 2017 148895 A.

### CITATION LIST

### PATENT LITERATURE

PTL 1: Japanese Patent Laying-Open No. 2016-20541

### SUMMARY OF INVENTION

A cemented carbide of the present invention as defined in claim 1 is:
a cemented carbide comprising a first phase, a second phase, and a third phase,
the first phase consists of a plurality of tungsten carbide particles,
a content of the first phase in the cemented carbide is 65% by volume or more and 85% by volume or less,
the tungsten carbide particles have an arithmetic mean particle size a of 0.5 µm or more and 2.0 µm or less,
the arithmetic mean particle size a and a particle size standard deviation b of the tungsten carbide particles have a relation defined by Formula I: $b < 0.49 a + 0.063$ Formula I
where a unit of a and b in Formula I is µm,
the arithmetic mean particle size a and a number-based 10% cumulative particle size c of the tungsten carbide particles have a relation defined by Formula II: $c > 0.34 a + 0.098$ Formula II
where a unit of a and c in Formula II is µm,
the second phase is composed of cobalt,
a cobalt content in the cemented carbide is 3% by mass or more and 15% by mass or less,
the third phase is composed of at least one element selected from the group consisting of titanium, tantalum, niobium, zirconium, and tungsten, and at least any of carbon and nitrogen,
the third phase comprises no tungsten carbide, and
a total content of titanium, tantalum, niobium, and zirconium in the cemented carbide is 2% by mass or more and 8% by mass or less.

### DETAILED DESCRIPTION

### [Problem to be Solved by the Present Invention]

In recent years, workpieces have become increasingly difficult to cut by cutting machining. Further, machining conditions have become stricter, for example, the cutting speed, the feed rate, and the depth of cut have been increased, because machining efficiency has been required to be improved.

Accordingly, an object of the present invention is to provide a cemented carbide capable of providing a cutting tool that can have excellent wear resistance and chipping resistance and can have a long tool life when used as a tool material, and to provide the cutting tool having a long tool life.

### [Advantageous Effect of the Present Invention]

According to the present invention, it is possible to provide a cemented carbide capable of providing a cutting tool that can have excellent wear resistance and chipping resistance and can have a long tool life when used as a tool material, and to provide the cutting tool having a long tool life.

### [Description of Embodiments of the Present Invention]

Initially, aspects of embodiments of the present invention are described one by one.
(1) A cemented carbide of the present invention is:
   a cemented carbide including a first phase, a second phase, and a third phase,
   the first phase consists of a plurality of tungsten carbide particles,
   a content of the first phase in the cemented carbide is 65% by volume or more and 85% by volume or less,
   the tungsten carbide particles have an arithmetic mean particle size a of 0.5 µm or more and 2.0 µm or less,
   the arithmetic mean particle size a and a particle size standard deviation b of the tungsten carbide particles have a relation defined by Formula I: $b < 0.49 a + 0.063$ Formula I
   where a unit of a and b in Formula I is µm,
   the arithmetic mean particle size a and a number-based 10% cumulative particle size c of the tungsten carbide particles have a relation defined by Formula II: $c > 0.34 a + 0.098$ Formula II
   where a unit of a and c in Formula II is µm,
   the second phase is composed of cobalt,
   a cobalt content in the cemented carbide is 3% by mass or more and 15% by mass or less,
   the third phase is composed of at least one element selected from the group consisting of titanium, tantalum, niobium, zirconium, and tungsten, and at least any of carbon and nitrogen,
   the third phase includes no tungsten carbide, and
   a total content of titanium, tantalum, niobium, and zirconium in the cemented carbide is 2% by mass or more and 8% by mass or less.
   The cemented carbide of the present invention is capable of providing a cutting tool that can have excellent wear resistance and chipping resistance and can have a long tool life when used as a tool material.
(2) As to (1) above, a first image obtained by binarization of a backscattered electron image of a cross section of the cemented carbide includes: a first region consisting of the first phase; and a second region consisting of the second phase and the third phase,
   in the first image, the second region may have an arithmetic mean particle size d of 0.3 µm or more and 0.9 µm or less. The backscattered electron image is obtained by photographing the cross section of the cemented carbide with a scanning electron microscope at a magnification of 5000x.
   Accordingly, the presence of the second region having an appropriate particle size improves the wear resistance of the cemented carbide. If the particle size of the second region is smaller, there is a tendency that wear due to falling-off is likely to increase during cutting machining. If the particle size of the second region is larger, i.e., the particle size distribution is nonuniform, there is a tendency that uneven wear is likely to increase, resulting in reduced wear resistance.
(3) As to (1) or (2) above, the tungsten carbide particles may have an arithmetic mean particle size a of 0.8 µm or more and 1.6 µm or less. Accordingly, the tool life is further improved.
(4) As to any one of (1) to (3) above, the cobalt content in the cemented carbide may be 4% by mass or more and 11% by mass or less. Accordingly, the tool life is further improved.
(5) A cutting tool of the present disclosure is a cutting tool including the cemented carbide according to any one of (1) to (4) above. The cutting tool of the present invention can have excellent wear resistance and chipping resistance and can have a long tool life.

### [Details of Embodiments of the Present Invention]

The following is a specific example of the cemented carbide of the present invention.

The expression "A to B" in the present disclosure defines the upper limit and the lower limit of the range (i.e., A or more and B or less) and, in the case where A is followed by no unit and only B is followed by unit, the unit of A is the same as that of B.

In the case where a compound or the like is represented by a chemical formula and the atomic ratio is not particularly limited in the present disclosure, the formula is intended to include any known atomic ratio, and should not necessarily be limited to only that in a stoichiometric range.

In the present disclosure, in the case where one or more numerical values are described as each of the lower limit and the upper limit of a numerical range, it is intended that a combination of any one numerical value described as the lower limit and any one numerical value described as the upper limit is also disclosed. For example, in the case where a1 or more, b1 or more, and c1 or more are each described as the lower limit and a2 or less, b2 or less, and c2 or less are each described as the upper limit, it is intended that a1 or more and a2 or less, a1 or more and b2 or less, a1 or more and c2 or less, b1 or more and a2 or less, b1 or more and b2 or less, b1 or more and c2 or less, c1 or more and a2 or less, c1 or more and b2 or less, and c1 or more and c2 or less are disclosed.

### [Embodiment 1: Cemented Carbide]

A cemented carbide according to one embodiment (also referred to as "Embodiment 1" hereinafter) of the present invention is:
a cemented carbide including a first phase, a second phase, and a third phase,
the first phase consists of a plurality of tungsten carbide particles,
a content of the first phase in the cemented carbide is 65% by volume or more and 85% by volume or less,
the tungsten carbide particles have an arithmetic mean particle size a of 0.5 µm or more and 2.0 µm or less,
the arithmetic mean particle size a and a particle size standard deviation b of the tungsten carbide particles have a relation defined by Formula I: $b < 0.49 a + 0.063$ Formula I
where a unit of a and b in Formula I is µm,
the arithmetic mean particle size a and a number-based 10% cumulative particle size c of the tungsten carbide particles have a relation defined by Formula II: $c > 0.34 a + 0.098$ Formula II
where a unit of a and c in Formula II is µm,
the second phase is composed of cobalt,
a cobalt content in the cemented carbide is 3% by mass or more and 15% by mass or less,
the third phase is composed of at least one element selected from the group consisting of titanium, tantalum, niobium, zirconium, and tungsten, and at least any of carbon and nitrogen,
the third phase includes no tungsten carbide, and
a total content of titanium, tantalum, niobium, and zirconium in the cemented carbide is 2% by mass or more and 8% by mass or less.

The cemented carbide of the present invention is capable of providing a cutting tool that can have excellent wear resistance and chipping resistance and can have a long tool life when used as a tool material. The reasons for this are not clear but are presumed to be as follows.
(i) The cemented carbide of the present invention includes a first phase consisting of a plurality of tungsten carbide particles (hereinafter also referred to as "WC particles") at a content of 65% by volume or more and 85% by volume or less. The tungsten carbide particles have a high hardness and a high thermal conductivity. Therefore, the cemented carbide of the present invention also has a high hardness and a high thermal conductivity, and a cutting tool including the cemented carbide can have an excellent wear resistance.
(ii) The cemented carbide of the present invention includes 3% by mass or more and 15% by mass or less of cobalt. Cobalt has a high toughness. Therefore, the cemented carbide of the present invention also has a high toughness, and a cutting tool including the cemented carbide can have an excellent chipping resistance.
(iii) The cemented carbide of the present invention includes a third phase composed of at least one element selected from the group consisting of titanium, tantalum, niobium, zirconium, and tungsten, and at least any of carbon and nitrogen. The third phase can improve the reaction resistance and the oxidation resistance of the cemented carbide. Therefore, a cutting tool including the cemented carbide is improved in reaction resistance and oxidation resistance, thereby improved in wear resistance.
(iv) In the cemented carbide of the present invention, the tungsten carbide particles have an arithmetic mean particle size a of 0.5 µm or more and 2.0 µm or less, and the arithmetic mean particle size a and a particle size standard deviation b of the tungsten carbide particles have a relation defined by Formula I. $b < 0.49 a + 0.063$ Formula I

The standard deviation b has a positive correlation with the arithmetic mean particle size a. The tungsten carbide particles satisfying Formula I indicate high uniformity of the particle size, regardless of the magnitude of the arithmetic mean particle size a.

In the cemented carbide of the present invention, the arithmetic mean particle size a and a number-based 10% cumulative particle size c of the tungsten carbide particles have a relation defined by Formula II. $c > 0.34 a + 0.098$ Formula II

The tungsten carbide particles satisfying Formula II indicate that there are less fine particles, regardless of the magnitude of the arithmetic mean particle size a.

In the case where the particle size of the tungsten carbide particles satisfies Formula I and Formula II, uniform distribution of the tungsten carbide particles in the cemented carbide texture is possible. Since the tungsten carbide particles are distributed uniformly in the cemented carbide of the present invention, cutting heat generated due to cutting is easily released through tungsten carbide particles to the outside of the cutting tool. Therefore, a tool including the cemented carbide of the present invention has an improved thermal conductivity and, even during high-speed machining where the cutting edge temperature is likely to increase, thermal wear of the tool is less likely to occur, so that the tool can have an excellent wear resistance.

### <First Phase>

### <<Composition of First Phase>>

In the cemented carbide of Embodiment 1, the first phase consists of a plurality of tungsten carbide particles. Here, the tungsten carbide particles include not only "pure WC particles (including WC containing no impurity elements and WC in which the content of impurity elements is below the detection limit)" but also "WC particles containing impurities therein as long as the effects of the present invention are not impaired." Examples of the impurities include iron (Fe), molybdenum (Mo), and sulfur (S).

### <<Content of First Phase in Cemented Carbide>>

In the cemented carbide of Embodiment 1, the content of the first phase in the cemented carbide is 65% by volume or more and 85% by volume or less. The lower limit of the content of the first phase in the cemented carbide is 65% by volume or more, may be 66% by volume or more, may be 70% by volume or more, may be 72% by volume or more, or may be 75% by volume or more, for the sake of improving the hardness. The upper limit of the content of the first phase in the cemented carbide is 85% by volume or less, may be 84% by volume or less, may be 80% by volume or less, or may be 78% by volume or less, for the sake of improving the toughness. The content of the first phase in the cemented carbide may be 70% by volume or more and 80% by volume or less, or may be 72% by volume or more and 84% by volume or less.

In the present invention, the content of the first phase in the cemented carbide is measured through the following procedure.
(A1) Any surface or any cross section of the cemented carbide is subjected to mirror finishing. Examples of the method of mirror finishing include a method of polishing with a diamond paste, a method using a focused ion beam device (FIB device), a method using a cross section polisher device (CP device), and a method combining them.
(B1) A backscattered electron image is obtained by photographing the mirror-finished surface of the cemented carbide with a scanning electron microscope ("S-3400N" manufactured by Hitachi High-Technologies Corporation). Six backscattered electron images are prepared. The areas to be photographed of the six backscattered electron images are different from each other. The location to be photographed can be set arbitrarily. The conditions are an observation magnification of 5000x and an accelerating voltage of 10 kV.
(C1) The six backscattered electron images obtained in the above (B1) are captured into a computer with image analysis software (ImageJ, version 1.51j8: https://imagej.nih.gov/ij/) and are subjected to binarization to obtain six images after binarization. The binarization is performed with the image analysis software under preset conditions, by pressing the button "Make Binary" on the computer screen after capturing the images. In each of the images after the binarization, a first region consisting of the first phase and a second region consisting of the second and third phases can be distinguished from each other by the shades of colors. For example, in each of the images after binarization, the first phase is shown as a black region, and the second and third phases are shown as white regions.
(D1) One rectangular measurement field of view of 25.3 µm in length × 17.6 µm in width is set in each of the obtained 6 images after the binarization. The area percentage (area %) of the first phase is measured with the entire measurement field of view as the denominator for each of the six measurement fields of view, using the above image analysis software.
(E1) The average of the area percentages (area %) of the first phase obtained in the six measurement fields of view is calculated. In the present invention, the average of the area percentages (area %) of the first phase obtained in the six measurement fields of view is taken as the content (% by volume) of the first phase in the cemented carbide.

To the extent that the applicant of the present application has made measurements, it has been confirmed that as long as the measurements are performed on the same sample, there is little variation in the measurement results even if the above measurement is performed multiple times by changing the area to be selected of the measurement field of view, and that the measurement results are not arbitrary ones even if the measurement field of view is set arbitrarily.

### <<Arithmetic Mean Particle Size a of Tungsten Carbide Particles>>

In the cemented carbide of Embodiment 1, the tungsten carbide particles have an arithmetic mean particle size a of 0.5 µm or more and 2.0 µm or less. In the present invention, the arithmetic mean particle size a of the tungsten carbide particles means a number-based arithmetic mean of the equivalent circle diameter of WC particles measured in a surface or a cross section of the cemented carbide. The arithmetic mean particle size a of 0.5 µm or more of the WC particles makes it less likely that falling-off and wear of a cutting tool for which the cemented carbide is used occur due to use. The arithmetic mean particle size a of 2.0 µm or less of the WC particles imparts a high deflective strength to the cemented carbide, and a cutting tool for which the cemented carbide is used can have an excellent chipping resistance.

For the sake of suppressing falling-off and wear, the lower limit of the arithmetic mean particle size a of the WC particles may be 0.50 µm or more, may be 0.60 µm or more, may be 0.70 µm or more, or may be 0.80 µm or more. For the sake of improving the deflective strength, the upper limit of the arithmetic mean particle size a of the WC particles may be 2.00 µm or less, may be 1.80 µm or less, may be 1.60 µm or less, or may be 1.40 µm or less. The arithmetic mean particle size a of the WC particles may be 0.50 µm or more and 2.00 µm or less, may be 0.60 µm or more and 1.80 µm or less, may be 0.70 µm or more and 1.60 µm or less, may be 0.80 µm or more and 1.60 µm or less, or may be 0.80 µm or more and 1.40 µm or less.

In the present invention, the arithmetic mean particle size a of the tungsten carbide particles is measured through the following procedure from (A2) to (B2).
(A2) Six images after binarization are obtained in the same manner as (A1) to (C1) described in connection with the method for measuring the content of the first phase in the cemented carbide.
(B2) One rectangular measurement field of view of 25.3 µm in length × 17.6 µm in width is set in each of the obtained 6 images after the binarization. The equivalent circle diameter (Heywood diameter: equivalent circle diameter of the projected area) is measured for each of all tungsten carbide particles (the first phase) in the six measurement fields of view, with image analysis software (ImageJ, version 1.51j8: https://imagej.nih.gov/ij/).
(C2) The number-based arithmetic mean of the equivalent circle diameter is calculated, based on all tungsten carbide particles excluding tungsten carbide particles with an equivalent circle diameter of 0.22 µm or less among the tungsten carbide particles in the six measurement fields of view. In the present invention, the arithmetic mean corresponds to the arithmetic mean particle size a of the WC particles. A reason for excluding tungsten carbide particles with an equivalent circle diameter of 0.22 µm or less, when calculating the arithmetic mean particle size a, is: it has been confirmed through measurement made by the inventors, the particles with an equivalent circle diameter of 0.22 µm or less often correspond to noises that have been mistakenly detected as tungsten carbide particles in image analysis.

To the extent that the applicant of the present application has made measurements, it has been confirmed that as long as the measurements are performed on the same sample, there is little variation in the measurement results even if the above measurement is performed multiple times by changing the area to be selected of the measurement field of view, and that the measurement results are not arbitrary ones even if the measurement field of view is set arbitrarily.

### <<Relation between Arithmetic Mean Particle Size a of Tungsten Carbide Particles and Particle Size Standard Deviation b of Tungsten Carbide Particles>>

In the cemented carbide of Embodiment 1, the arithmetic mean particle size a of the tungsten carbide particles and the particle size standard deviation b of the tungsten carbide particles have a relation defined by Formula I. $b < 0.49 a + 0.063$ Formula I In Formular I, a unit of a and b is µm.

The fact that the particle size of a plurality of tungsten carbide particles included in the cemented carbide satisfies the relation defined by Formula I indicates that the particle size of the tungsten carbide particles has high uniformity, regardless of the magnitude of the arithmetic mean particle size a of the tungsten carbide particles. For the sake of improving the particle size uniformity, the arithmetic mean particle size a and the standard deviation b may have relations defined by Formula I-A and Formula I-B. $b < 0.49 a + 0.061$ Formula I-A $b < 0.49 a + 0.059$ Formula I-B

In the present invention, the particle size standard deviation b of the tungsten carbide particles is measured through the following procedure. In the same manner as (A2) to (B2) described in connection with the method for measuring the arithmetic mean particle size a of the tungsten carbide particles, the equivalent circle diameter (Heywood diameter: equivalent circle diameter of the projected area) is measured for each of all tungsten carbide particles (the first phase) in the six measurement fields of view. Based on all tungsten carbide particles except for tungsten carbide particles having an equivalent circle diameter of 0.22 µm or less, among the tungsten carbide particles in the six measurement fields of view, the particle size standard deviation b of the tungsten carbide particles is calculated with the following formula. [Math. 1] $s = \sqrt{\frac{1}{n} {\sum }_{i = 1}^{n} {\left({x}_{i}-\overline{x}\right)}^{2}}$ In the above formula, s denotes the standard deviation b, n denotes the number of tungsten carbide particles, xᵢ denotes the equivalent circle diameter of each tungsten carbide particle, and x denotes the arithmetic mean particle size a of tungsten carbide particles.

In the cemented carbide of Embodiment 1, the arithmetic mean particle size a of the tungsten carbide particles and a number-based 10% cumulative particle size c of the tungsten carbide particles have a relation defined by Formula II. $c > 0.34 a + 0.098$ Formula II In Formula II, a unit of a and c is µm. In the present invention, the number-based 10% cumulative particle size c of the tungsten carbide particles means the cumulative particle size at 10% from the smaller particle size side in a number-based cumulative particle size distribution of the tungsten carbide particles.

The fact that the particle size of a plurality of tungsten carbide particles included in the cemented carbide satisfies the relation defined by Formula II indicates that there are less fine particles of tungsten carbide, regardless of the magnitude of the arithmetic mean particle size a of the tungsten carbide particles. For the sake of reducing fine particles of tungsten carbide, the arithmetic mean particle size a and the 10% cumulative particle size c may have relations defined by Formula II-A and Formula II-B.$c > 0.34 a + 0.099$ Formula II-A $c > 0.34 a + 0.100$ Formula II-B

In the present invention, the number-based 10% cumulative particle size c of the tungsten carbide particles is measured through the following procedure. In the same manner as (A2) to (B2) described in connection with the method for measuring the arithmetic mean particle size a of the tungsten carbide particles, the equivalent circle diameter (Heywood diameter: equivalent circle diameter of the projected area) is measured for each of all tungsten carbide particles (the first phase) in the six measurement fields of view. Based on all tungsten carbide particles excluding tungsten carbide particles with an equivalent circle diameter of 0.22 µm or less among the tungsten carbide particles in the six measurement fields of view, the number-based 10% cumulative particle size c is determined.

The cemented carbide of Embodiment 1 includes the third phase composed of at least one element selected from the group consisting of titanium, tantalum, niobium, zirconium, and tungsten, and at least any of carbon and nitrogen. The third phase includes no tungsten carbide. The third phase is added in order to improve the reaction resistance and the oxidation resistance, for example, of the cemented carbide. However, due to a low thermal conductivity of the third phase, in the case where the cemented carbide including the third phase is used under a cutting condition, like high-speed machining for example, where the cutting edge temperature is likely to increase, there is a tendency that the cutting edge has a high temperature so that thermal wear is likely to increase and the wear resistance of the cutting tool is deteriorated. In the cemented carbide of Embodiment 1, the particle size distribution of the tungsten carbide particles satisfies Formula I and Formula II indicated above, and therefore, the tungsten carbide particles in the cemented carbide texture are distributed uniformly, so that cutting heat generated due to cutting is easily released through the space between tungsten carbide particles to the outside of the cutting tool. Therefore, a tool including the cemented carbide of the present invention has an improved thermal conductivity, and thermal wear of the tool is less likely to occur, so that the tool can have an excellent wear resistance, while including the third phase.

### <Second Phase>

### <<Composition of Second Phase>>

In the cemented carbide of Embodiment 1, the second phase is composed of cobalt. The second phase is a binder phase binding together the tungsten carbide particles constituting the first phase.

In the present invention, "the second phase is composed of cobalt (Co)" also includes the case where "the second phase includes impurities along with cobalt, as long as the effects of the present disclosure are not impaired." Examples of the impurities include manganese (Mn), magnesium (Mg), calcium (Ca), molybdenum (Mo), sulfur (S), and aluminum (Al).

### <<Cobalt Content in Cemented Carbide>>

In the cemented carbide of Embodiment 1, the cobalt content in the cemented carbide is 3% by mass or more and 15% by mass or less. The lower limit of the cobalt content in the cemented carbide is 3% by mass or more, may be 4% by mass or more, may be 5% by mass or more, or may be 6% by mass or more, for the sake of improving the toughness. The upper limit of the cobalt content in the cemented carbide is 15% by mass or less, may be 11% by mass or less, or may be 9% by mass or less, for the sake of improving the hardness. The cobalt content in the cemented carbide may be 4% by mass or more and 11% by mass or less, or may be 5% by mass or more and 9% by mass or less.

In the present invention, the cobalt content in the cemented carbide is measured by a cobalt titration method. The cobalt titration method is performed in accordance with the Japan Cutting & Wear-resistant Tool Association Standards (TAS 0054:2017) or ISO 3909:1976. Specifically, this is performed through the following procedure. A sample consisting of the cemented carbide is ground and passed through a 49-mesh sieve. After dissolving the sample in nitric acid, hydrofluoric acid and adding ammonium citrate and aqueous ammonia thereto, it is subjected to potentiometric titration with potassium ferricyanide (red prussiate) using platinum and saturated calomel (tungsten) electrodes. The measuring device to be used is "AUT-501" manufactured by DKK-TOA CORPORATION.

### <Third Phase>

### <<Composition of Third Phase>>

In the cemented carbide of Embodiment 1, the third phase is composed of at least one element selected from the group consisting of titanium, tantalum, niobium, zirconium, and tungsten, and at least any of carbon and nitrogen. The third phase includes no tungsten carbide. The third phase can improve the reaction resistance and the oxidation resistance of the cemented carbide. Therefore, a cutting tool including the cemented carbide is improved in reaction resistance and oxidation resistance.

In the present invention, "the third phase is composed of at least one element selected from the group consisting of titanium, tantalum, niobium, zirconium, and tungsten, and at least any of carbon and nitrogen" includes the case where "the third phase includes impurities, as long as the effects of the present invention are not impaired." Examples of the impurities include manganese (Mn), magnesium (Mg), calcium (Ca), molybdenum (Mo), sulfur (S), and aluminum (Al).

The third phase may include at least two elements selected from the group consisting of titanium, tantalum, niobium, zirconium, and tungsten.

The third phase can include, for example, at least one selected from the group consisting of titanium carbide (TiC), tantalum carbide (TaC), niobium carbide (NbC), titanium nitride (TiN), titanium carbonitride (TiCN), zirconium carbonitride (ZrCN), and zirconium carbide (ZrC), and solid solutions derived from these compounds. Examples of the solid solution include WTiCN, WTiTaCN, and WTiTaNbZrCN.

In the present invention, it is confirmed through the following procedure that the third phase is composed of at least one element selected from the group consisting of titanium, tantalum, niobium, zirconium, and tungsten, and at least any of carbon and nitrogen, and that the third phase includes no tungsten carbide.

(A3) The cemented carbide at any position is subjected to thinning with an ion slicer (device: IB09060CIS (trademark) manufactured by JEOL Ltd.) to produce a sample with a thickness of 30 to 100 nm. The accelerating voltage of the ion slicer is 6 kV for thinning machining and 2 kV for finishing.

(B3) The sample is observed at a magnification of 50,000x with a scanning transmission electron microscope (STEM) (device: JFM-ARM300F (trademark) manufactured by JEOL Ltd.) to obtain a STEM-HAADF (high-angle annular dark field scanning transmission electron microscope) image. The area to be photographed of the STEM-HAADF image is set to the central part of the sample, that is, to a position where portions that are clearly different in properties from the bulk portion are not included (a position where the area to be imaged is entirely the bulk portion of the cemented carbide), such as near the surface of the cemented carbide. The measurement condition is an accelerating voltage of 200 kV.

(C3) The third phase present in the STEM-HAADF image is subjected to spot analysis with EDX attached to STEM (STEM-EDX) to quantify the elements constituting the third phase. The spot size is set for each third phase to a range that includes only the third phase. As a result of quantifying the constituent elements, if the following (a) and (b) are satisfied, it is confirmed that the third phase is composed of at least one element selected from the group consisting of titanium, tantalum, niobium, zirconium, and tungsten, and at least any of carbon and nitrogen.
(a) At least one element selected from the group consisting of titanium, tantalum, niobium, zirconium, and tungsten, and at least any of carbon and nitrogen are present in the third phase.
(b) Impurity elements other than titanium, tantalum, niobium, zirconium, tungsten, carbon and nitrogen are not confirmed in the third phase, or the content of these impurity elements is less than 0.1% by mass.

When as a result of subjecting the third phase to spot analysis with EDX (STEM-EDX), only tungsten and carbon are detected, and the content of carbon is about 6.1% by mass with respect to the total mass of tungsten and carbon, it is determined that the third phase include tungsten carbide. In other words, if elements other than tungsten and carbon are confirmed as a result of subjecting the third phase to spot analysis with EDX (STEM-EDX), it is determined that the third phase includes no tungsten carbide.

### <<Total Content of Titanium, Tantalum, Niobium, and Zirconium in Cemented Carbide>>

In the cemented carbide of Embodiment 1, the total content of titanium, tantalum, niobium, and zirconium in the cemented carbide is 2% by mass or more and 8% by mass or less. The lower limit of the total content of titanium, tantalum, niobium, and zirconium in the cemented carbide is 2% by mass or more, may be 3% by mass or more, or may be 4% by mass or more, for the sake of improving the reaction resistance and the oxidation resistance. The upper limit of the total content of titanium, tantalum, niobium, and zirconium in the cemented carbide is 8% by mass or less, may be 7% by mass or less, or may be 6% by mass or less, for the sake of improving the thermal conductivity of the cemented carbide. The total content of titanium, tantalum, niobium, and zirconium in the cemented carbide is 2% by mass or more and 8% by mass or less, may be 3% by mass or more and 7% by mass or less, or may be 4% by mass or more and 6% by mass or less. Here, the third phase may include at least two elements selected from the group consisting of titanium, tantalum, niobium, zirconium, and tungsten. In the present invention, the total content of titanium, tantalum, niobium, and zirconium in the cemented carbide means, when the cemented carbide includes all of titanium, tantalum, niobium, and zirconium, the total content of these elements and, when the cemented carbide includes one or more and three or less elements selected from the group consisting of titanium, tantalum, niobium, and zirconium, it means the total content of the included elements.

In the present invention, the total content of titanium, tantalum, niobium, and zirconium in the cemented carbide is measured by ICP emission spectroscopy. In the present disclosure, "ICPS-8100" (trademark) manufactured by Shimadzu Corporation is used as an ICP emission spectrometer.

### <Arithmetic Mean Particle Size of Second Region>

In the cemented carbide of Embodiment 1, a first image obtained by binarization of a backscattered electron image of a cross section of the cemented carbide may include: a first region consisting of the first phase; and a second region consisting of the second phase and the third phase and, in the first image, the second region may have an arithmetic mean particle size d of 0.3 µm or more and 0.9 µm or less. The backscattered electron image is obtained by photographing the cross section of the cemented carbide with a scanning electron microscope at a magnification of 5000x. For the sake of suppressing falling-off of particles to thereby improve the wear resistance, the lower limit of the arithmetic mean particle size d of the second region may be 0.3 µm or more, may be 0.4 µm or more, or may be 0.5 µm or more. For the sake of suppressing uneven wear to thereby improve the wear resistance, the upper limit of the arithmetic mean particle size d of the second region may be 0.9 µm or less, 0.8 µm or less, or 0.7 µm or less. The arithmetic mean particle size d of the second region may be 0.4 µm or more and 0.8 µm or less, or 0.5 µm or more and 0.7 µm or less.

In the present disclosure, the arithmetic mean particle size d of the second region is measured through the following procedure from (A4) to (B4).

(A4) Six images after binarization are obtained in the same manner as (A1) to (C1) described in connection with the method for measuring the content of the first phase in the cemented carbide.

(B4) One rectangular measurement field of view of 25.3 µm in length × 17.6 µm in width is set in each of the obtained 6 images after the binarization. The equivalent circle diameter (Heywood diameter: equivalent circle diameter of the projected area) is measured for each of all second regions in the six measurement fields of view, with image analysis software (ImageJ, version 1.51j8: https://imagej.nih.gov/ij/). Based on all second regions in the six measurement fields of view, the number-based arithmetic mean of the equivalent circle diameter is calculated. In the present disclosure, this arithmetic mean corresponds to the arithmetic mean particle size d of the second region.

To the extent that the applicant of the present application has made measurements, it has been confirmed that as long as the measurements are performed on the same sample, there is little variation in the measurement results even if the above measurement is performed multiple times by changing the area to be selected of the measurement field of view, and that the measurement results are not arbitrary ones even if the measurement field of view is set arbitrarily.

### <<Chromium Content>>

The cemented carbide of Embodiment 1 can include chromium (Cr). Chromium has an effect of suppressing particle growth of tungsten carbide particles. In the cemented carbide, the percentage of the mass of chromium relative to the mass of cobalt may be 0% or more and 8% or less. Accordingly, it is possible to effectively suppress remaining of raw fine WC particles as they are in the resultant cemented carbide, and effectively suppress generation of coarse particles, so that the tool life is improved. In the cemented carbide, when the percentage of the mass of chromium relative to the mass of cobalt exceeds 8%, the solid-solubility limit of chromium in cobalt is exceeded, chromium precipitates in the form of its carbide or the like in the cemented carbide, and chipping resistance of the cemented carbide tends to be deteriorated.

For the sake of improving the chipping resistance, the upper limit of the percentage of the mass of chromium relative to the mass of cobalt in the cemented carbide may be 7% or less, or may be 6% or less. For the sake of suppressing generation of coarse particles, the lower limit of the percentage of the mass of chromium relative to the mass of cobalt in the cemented carbide may be 1% or more or may be 2% or more. The percentage of the mass of chromium to the mass of cobalt in the cemented carbide may be 1% or more and 7% or less, or may be 2% or more and 6% or less.

The chromium content in the cemented carbide is measured by ICP emission spectroscopy.

### <<Zirconium Content>>

The cemented carbide of Embodiment 1 can include zirconium (Zr). Zirconium has the effect of improving the high temperature hardness of the cemented carbide. In the cemented carbide, the percentage of the mass of zirconium relative to the mass of cobalt may be 0% or more and 6% or less. Accordingly, the high temperature hardness of the cemented carbide is improved, so that the tool life is improved. In the cemented carbide, when the percentage of the mass of zirconium relative to the mass of cobalt exceeds 6%, the solid-solubility limit of zirconium in cobalt is exceeded, zirconium precipitates in the form of its carbide or the like in the cemented carbide, and chipping resistance of the cemented carbide tends to be deteriorated.

In the cemented carbide, the upper limit of the percentage of the mass of zirconium relative to the mass of cobalt may be 5% or less, or may be 4% or less, for the sake of balance between improvement of the chipping resistance and improvement of the high temperature hardness. In the cemented carbide, the lower limit of the percentage of the mass of zirconium relative to the mass of cobalt may be 0.5% or more, or may be 1% or more, for the sake of improving the high temperature hardness. In the cemented carbide, the percentage of the mass of zirconium relative to the mass of cobalt may be 0.5% or more and 5% or less, or may be 1% or more and 4% or less.

The zirconium content in the cemented carbide is measured by ICP emission spectroscopy.

### <Composition of Cemented Carbide>

The cemented carbide of Embodiment 1 includes a first phase, a second phase, and a third phase. The cemented carbide of Embodiment 1 may consist of a first phase, a second phase, and a third phase. The cemented carbide of Embodiment 1 can include another phase/other phases in addition to the first phase, the second phase, and the third phase, as long as the effects of the present invention are not impaired. Examples of the other phases include carbides of chromium. The cemented carbide of Embodiment 1 can include impurities in addition to the first phase, the second phase, and the third phase, as long as the effects of the present invention are not impaired.
Examples of the impurities include iron (Fe), molybdenum (Mo), sulfur (S), manganese (Mn), magnesium (Mg), calcium (Ca), and aluminum (Al). The content of the impurities in the cemented carbide (the total concentration of the impurities when two or more elements constitute the impurities) may be less than 0.1% by mass. The content of the impurities in the cemented carbide can be measured by ICP emission spectroscopy.

### <Method for Manufacturing Cemented Carbide>

The cemented carbide of Embodiment 1 can be manufactured, for example, through the steps of preparing raw material powders, mixing, molding, sintering, and cooling, in this order. Each step is described below.

### <<Preparing Raw Material Powders>>

In preparing raw material powders, all raw material powders of materials constituting the cemented carbide are prepared. As raw material powders, a tungsten carbide powder, which is a raw material for the first phase, a cobalt (Co) powder which is a raw material for the second phase, a titanium carbide (TiC) powder, a titanium nitride (TiN) powder, a tantalum carbide (TaC) powder, a niobium carbide (NbC) powder, and a zirconium carbide (ZrC) powder which are raw materials for the third phase (the powders are collectively referred to as "raw material powder for the third phase" hereinafter) are prepared. If necessary, a chromium carbide (Cr₃C₂) powder can be prepared as a particle growth inhibitor. As these raw material powders, commercially available ones can be used.

As the tungsten carbide powder (hereinafter also referred to as "WC powder"), a tungsten carbide powder having a uniform particle size is prepared. Specifically, a WC powder is prepared that has an average particle size of 1.5 µm or more and 6.0 µm or less, and a particle size distribution meeting a ratio d10/d90 of 0.2 or more and 0.5 or less, where d10 is a volume-based 10% cumulative particle size, and d90 is a volume-based 90% cumulative particle size. In the present disclosure, the particle size of each WC particle included in the WC powder is measured by the FSSS (Fisher Sub-Sieve Sizer) method. A measuring instrument used for the FSSS method is "Sub-Sieve Sizer Model 95" (trademark) manufactured by Fisher Scientific. The particle size distribution of the WC powder is measured with a particle size distribution measuring apparatus (tradename: MT3300EX) manufactured by Microtrac.

The average particle size of the cobalt powder may be 0.5 µm or more and 3.0 µm or less. The average particle size of the raw material particles for the third phase may be 0.5 µm or more and 4.0 µm or less. The average particle size of the chromium carbide powder may be 1.0 µm or more and 2.0 µm or less. In the present disclosure, the average particle size of these powders is the average particle size measured by the FSSS (Fisher Sub-Sieve Sizer) method. The average particle size is measured with "Sub-Sieve Sizer Model 95" (trademark) manufactured by Fisher Scientific.

### <<Mixing>>

In the mixing, the raw material powders prepared in the preparing are mixed together to produce a powder mixture. The content of each raw material powder in the powder mixture is appropriately adjusted in consideration of the content of each component of the first phase, the second phase, and the third phase of the cemented carbide.

As a method for mixing, a method that can keep a state in which the WC powder has a uniform particle size in the powder mixture after mixing is used. Specifically, a ball mill is used, media having a smaller media size than the conventional one is used, the number of revolutions is decreased, and the mixing time is shortened. In this way, the WC particles can be prevented from being ground. The media size may be 5 mm or more and 10 mm or less, for example. The number of revolutions may be 15 rpm or more and 30 rpm or less, for example. The mixing time may be 15 hours or more and 36 hours or less, for example. If the mixing time is less than 15 hours, gaps are likely to be generated in the cemented carbide due to insufficient mixing.

If a mixing method applying a strong grinding force (Atritor, for example) is used, the WC particles are entirely ground into fine particles while being mixed, even when the raw WC powder has a uniform particle size, so that the mixed WC powder has a fine particle size and coarse particles are generated by particle growth during sintering. Therefore, a manufacturing method in the present embodiment does not adopt a mixing method that applies a strong grinding force.

After the mixing, the powder mixture may be granulated as required. By granulating the powder mixture, it is easy to fill a die or mold with the powder mixture during the molding which is described later herein. Any known granulation method is applicable to granulation, and a commercially available granulator such as a spray dryer can be used, for example.

### <<Molding>>

The molding is molding the powder mixture obtained in the mixing into a predetermined shape to produce a compact. The molding method and molding conditions in the molding are not particularly limited, and a general method and general conditions may be adopted. The predetermined shape may be the shape of a cutting tool, for example.

### <<Sintering>>

In the sintering, the compact obtained in the molding is sintered to produce a cemented carbide. The method for manufacturing a cemented carbide in the present disclosure may set the sintering temperature to 1380°C or more and 1500°C or less. In this way, the particle size of WC particles in the cemented carbide can be made uniform. Moreover, generation of fine WC particles and coarse WC particles is prevented.

If the sintering temperature is lower than 1380°C, gaps are generated in the cemented carbide, resulting in deterioration of the chipping resistance of the cemented carbide. If the sintering temperature is higher than 1500°C, the WC particles are grown into coarse particles, resulting in nonuniformity of the particle size of the WC particles.

### <<Cooling>>

The cooling is to cool the cemented carbide after completion of the sintering. As conditions for the cooling, general conditions may be adopted, and the cooling conditions are not particularly limited.

### [Embodiment 2: Cutting Tool]

A cutting tool of Embodiment 2 includes the cemented carbide of Embodiment 1. The cutting tool of Embodiment 2 can include at least a cutting edge made of the cemented carbide of Embodiment 1. In the present disclosure, the cutting edge means a part involved in cutting, and means a ridgeline of the cutting edge and a region where the distance from the ridgeline of the cutting edge in the direction toward the cemented carbide is within 0.5 mm.

Examples of the cutting tool can include a cutting bit, a drill, an end mill, an indexable cutting insert for milling, an indexable cutting insert for turning, a metal saw, a gear-cutting tool, a reamer, and a tap.

The cemented carbide of Embodiment 2 may constitute the entirety of these tools, or may constitute a part thereof. As used herein, "constitute a part" refers to, for example, a tool in which the cemented carbide of Embodiment 2 is brazed to a predetermined position of any substrate to form a cutting edge part.

The cutting tool of Embodiment 2 may further include a hard film that covers at least one portion of the surface of the substrate made of the cemented carbide. The hard film that can be used includes a film made of a diamond-like carbon, diamond, Al₂O₃, or TiCN. The hard film may be a CVD film deposited by chemical vapor deposition (CVD).

### EXAMPLE

The present embodiments are further specifically described with reference to Examples. However, the present embodiments are not limited by these Examples.

### <Production of Cemented Carbide>

### <<Preparing>>

As raw material powders, the powders of the composition specified under the cell "raw material powder" in Table 1 were prepared. A plurality of tungsten carbide (WC) powders different in average particle size and particle size distribution were prepared. The average particle size and d10/d90 of each WC powder are specified under respective cells "average particle size (µm)" and "d10/d90" under the cell "WC" under the cell "raw material powder" in Table 1.

The average particle size of cobalt (Co) powder is 1.2 µm, the average particle size of chromium carbide (Cr₃C₂) powder is 1.5 µm, the average particle size of titanium carbide (TiC) powder is 1.5 µm, the average particle size of titanium nitride (TiN) powder is 2.0 µm, the average particle size of tantalum carbide (TaC) powder is 1.0 µm, the average particle size of niobium carbide (NbC) powder is 1.1 µm, and the average particle size of zirconium carbide (ZrC) powder is 1.5 µm.

### <<Mixing>>

The raw material powders of respective amounts specified under the cells "mass%" under the cell "raw material powder" in Table 1 were mixed to produce a powder mixture. The "mass%" under the cell "raw material powder" in Table 1 indicates the percentage of the mass of each raw material powder relative to the total mass of the raw material powders. They were mixed with a ball mill. The media size was 8 mm. The number of revolutions and the mixing time for each sample are specified under the cells "number of revolutions" and "time" under the cell "mixing" in Table 2. The resultant powder mixture was spray-dried to obtain a granulated powder.

### [Table 1]

**Table 1**

| sample No. | raw material powder | | | | | | | | | |
|---|---|---|---|---|---|---|---|---|---|---|
| | WC | | | Co | Cr₃C₂ | TiC | TiN | TaC | NbC | ZrC |
| | average particle size (µm) | d10/ d90 | mass % | mass % | mass % | mass % | mass % | mass % | mass % | mass % |
| 1 | 1.5 | 0.28 | 77.2 | 14.0 | 0.4 | 2.2 | 2.0 | 1.0 | 2.8 | 0.4 |
| 2 | 2.2 | 0.31 | 91.8 | 4.0 | 0.1 | 1.6 | 0.8 | 0.8 | 0.8 | 0.1 |
| 3 | 2.8 | 0.32 | 89.0 | 5.0 | 0.2 | 1.3 | 1.4 | 1.5 | 1.5 | 0.1 |
| 4 | 3.5 | 0.34 | 89.6 | 5.0 | 0.2 | 1.2 | 1.6 | 1.3 | 1.0 | 0.1 |
| 5 | 4.4 | 0.37 | 89.1 | 5.0 | 0.2 | 1.2 | 2.0 | 1.9 | 0.5 | 0.1 |
| 6 | 6.0 | 0.35 | 90.4 | 5.0 | 0.2 | 1.2 | 1.0 | 1.0 | 1.1 | 0.1 |
| 7 | 3.5 | 0.33 | 92.4 | 3.0 | 0.1 | 1.8 | 1.1 | 0.4 | 1.1 | 0.1 |
| 8 | 4.1 | 0.34 | 90.7 | 4.0 | 0.1 | 1.1 | 1.4 | 1.5 | 1.1 | 0.1 |
| 9 | 3.2 | 0.32 | 89.4 | 6.0 | 0.2 | 0.9 | 1.5 | 1.0 | 0.9 | 0.2 |
| 10 | 3.2 | 0.32 | 86.6 | 9.0 | 0.3 | 1.5 | 0.4 | 1.2 | 0.8 | 0.2 |
| 11 | 3.8 | 0.33 | 83.8 | 11.0 | 0.3 | 1.0 | 1.0 | 1.0 | 1.6 | 0.3 |
| 12 | 4.1 | 0.34 | 79.6 | 15.0 | 0.5 | 2.0 | 1.4 | 0.6 | 0.6 | 0.4 |
| 13 | 3.5 | 0.34 | 91.8 | 5.0 | 0.2 | 0.5 | 0.5 | 1.2 | 0.7 | 0.1 |
| 14 | 4.1 | 0.35 | 89.5 | 5.0 | 0.2 | 1.1 | 1.6 | 0.8 | 1.7 | 0.1 |
| 15 | 3.2 | 0.32 | 86.3 | 5.0 | 0.2 | 1.9 | 2.0 | 2.1 | 2.4 | 0.1 |
| 16 | 3.5 | 0.34 | 89.1 | 5.0 | 0.2 | 2.0 | 1.4 | 1.8 | 0.4 | 0.1 |
| 17 | 3.5 | 0.33 | 89.8 | 5.0 | 0.2 | 1.6 | 0.9 | 0.7 | 1.9 | 0.0 |
| 18 | 3.5 | 0.34 | 89.5 | 5.0 | 0.2 | 3.0 | 2.4 | 0.0 | 0.0 | 0.0 |
| 19 | 3.5 | 0.35 | 89.9 | 5.0 | 0.2 | 1.7 | 1.8 | 1.5 | 0.0 | 0.0 |
| 20 | 3.5 | 0.33 | 90.0 | 5.0 | 0.2 | 2.4 | 0.0 | 2.5 | 0.0 | 0.0 |
| 21 | 3.5 | 0.33 | 89.8 | 5.0 | 0.2 | 1.8 | 1.5 | 1.6 | 0.0 | 0.1 |
| 22 | 3.5 | 0.34 | 89.7 | 5.0 | 0.2 | 5.2 | 0.0 | 0.0 | 0.0 | 0.0 |
| 101 | 3.5 | 0.34 | 74.2 | 16.0 | 0.5 | 2.2 | 2.1 | 2.6 | 2.0 | 0.4 |
| 102 | 3.5 | 0.33 | 93.7 | 2.0 | 0.1 | 0.9 | 1.2 | 1.4 | 0.7 | 0.1 |
| 103 | 1.2 | 0.17 | 93.0 | 3.0 | 0.1 | 1.0 | 0.9 | 1.0 | 0.9 | 0.1 |
| 104 | 6.1 | 0.13 | 81.1 | 14.0 | 0.4 | 1.8 | 1.1 | 0.9 | 0.3 | 0.4 |
| 105 | 4.3 | 0.22 | 81.3 | 14.0 | 0.4 | 0.9 | 0.4 | 1.1 | 1.5 | 0.4 |
| 106 | 3.6 | 0.24 | 80.6 | 14.0 | 0.4 | 0.9 | 0.9 | 2.0 | 0.8 | 0.4 |
| 107 | 3.2 | 0.32 | 93.7 | 2.0 | 0.1 | 1.4 | 1.8 | 0.5 | 0.5 | 0.1 |
| 108 | 3.8 | 0.34 | 75.4 | 20.0 | 0.6 | 1.1 | 0.4 | 1.4 | 0.6 | 0.5 |
| 109 | 3.8 | 0.33 | 84.4 | 14.0 | 0.4 | 0.1 | 0.2 | 0.4 | 0.1 | 0.4 |
| 110 | 4.1 | 0.34 | 83.6 | 5.0 | 0.2 | 3.0 | 2.4 | 3.5 | 2.2 | 0.1 |
| 111 | 1.5 | 0.14 | 96.3 | 2.0 | 0.1 | 0.5 | 0.3 | 0.4 | 0.4 | 0.1 |
| 112 | 6.3 | 0.39 | 75.6 | 16.0 | 0.5 | 2.0 | 2.0 | 2.0 | 1.8 | 0.1 |

### <<Molding>>

The obtained granulated powder was press molded to produce a chip-shaped compact.

### <<Sintering>>

The compact was placed in a sintering furnace, and heated at the temperature for the time specified under the cells "temperature" and "time" under the cell "sintering" in Table 2.

### <<Cooling>>

After completion of the sintering, slow cooling was performed in an argon (Ar) gas atmosphere to obtain the cemented carbide.

### [Table 2]

**Table 2**

| sample No. | mixing | | sintering | |
|---|---|---|---|---|
| | number of revolutions | time | temperature | time |
| | rpm | hr | °C | hr |
| 1 | 25 | 20 | 1440 | 0.5 |
| 2 | 25 | 20 | 1440 | 0.5 |
| 3 | 25 | 20 | 1440 | 0.5 |
| 4 | 25 | 20 | 1440 | 0.5 |
| 5 | 25 | 20 | 1440 | 0.5 |
| 6 | 25 | 20 | 1440 | 0.5 |
| 7 | 25 | 20 | 1440 | 0.5 |
| 8 | 25 | 20 | 1440 | 0.5 |
| 9 | 25 | 20 | 1440 | 0.5 |
| 10 | 25 | 20 | 1440 | 0.5 |
| 11 | 25 | 20 | 1440 | 0.5 |
| 12 | 25 | 20 | 1440 | 0.5 |
| 13 | 25 | 20 | 1440 | 0.5 |
| 14 | 25 | 20 | 1440 | 0.5 |
| 15 | 25 | 20 | 1440 | 0.5 |
| 16 | 25 | 20 | 1440 | 0.5 |
| 17 | 25 | 20 | 1440 | 0.5 |
| 18 | 25 | 20 | 1440 | 0.5 |
| 19 | 25 | 20 | 1440 | 0.5 |
| 20 | 25 | 20 | 1440 | 0.5 |
| 21 | 25 | 20 | 1440 | 0.5 |
| 22 | 25 | 20 | 1440 | 0.5 |
| 101 | 25 | 20 | 1440 | 0.5 |
| 102 | 25 | 20 | 1440 | 0.5 |
| 103 | 25 | 20 | 1440 | 0.5 |
| 104 | 25 | 20 | 1440 | 0.5 |
| 105 | 35 | 40 | 1440 | 0.5 |
| 106 | 25 | 20 | 1520 | 1.5 |
| 107 | 25 | 20 | 1440 | 0.5 |
| 108 | 25 | 20 | 1440 | 0.5 |
| 109 | 25 | 20 | 1440 | 0.5 |
| 110 | 25 | 20 | 1440 | 0.5 |
| 111 | 25 | 20 | 1440 | 0.5 |
| 112 | 25 | 20 | 1370 | 0.2 |

### <Evaluation of Cemented Carbide>

### <<Composition of Cemented Carbide>>

For the cemented carbide of each sample, the first phase content in the cemented carbide, the cobalt content in the cemented carbide, and the total content of titanium, tantalum, niobium, and zirconium in the cemented carbide were measured. The specific method for measuring the content is the one described in connection with Embodiment 1. The results are indicated in respective cells under "1st phase content," "Co content" and "Ti, Ta, Zr, Nb total content" under the cell "cemented carbide" in Table 3. The indication "Ti, Ta, Zr, Nb total content" does not necessarily indicate that each sample contains all of Ti, Ta, Zr and Nb.

### <<Arithmetic Mean Particle Size a, Standard Deviation b, 10% Cumulative Particle Size c of Tungsten Carbide Particles>>

For the cemented carbide of each sample, the arithmetic mean particle size a, the standard deviation b, and the 10% cumulative particle size c of the tungsten carbide particles were measured. The specific method for measuring is the one described in connection with Embodiment 1. The results are indicated under respective cells "arithmetic mean particle size a," "standard deviation b" and "10% cumulative particle size c" under "WC particles" under "1st phase" in Table 3.

Based on "arithmetic mean particle size a," "standard deviation b" and "10% cumulative particle size c" of each sample, it was confirmed whether or not the sample satisfies the relations defined by Formulas I and II. $b < 0.49 a + 0.063$ Formula I $c > 0.34 a + 0.098$ Formula II

The results are indicated under the cells "Formula I" and "Formula II" in Table 3. As to "Formula I," "Yes" means that the relation defined by Formula I is satisfied, and "No" means that the relation defined by Formula I is not satisfied. As to "Formula II," "Yes" means that the relation defined by Formula II is satisfied, and "No" means that the relation defined by Formula II is not satisfied.

### <<Composition of Second Phase>>

For all samples, it was confirmed that the second phase was composed of cobalt.

### <<Composition of Third Phase>>

For each sample, the elements included in the third phase were identified by STEM-EDX. The specific identification method is the one described in connection with Embodiment 1. The results are indicated under the cell "composition" under "3rd phase" in Table 4. For all samples, it was confirmed that the third phase was composed of the elements indicated in Table 4, and that the third phase included no tungsten carbide.

### <<Arithmetic Mean Particle Size d of Second Region>>

For each sample, the arithmetic mean particle size d of the second region was measured. The specific method for measuring is the one described in connection with Embodiment 1. The results are indicated under the cell "arithmetic mean particle size d" under "2nd region" under "1st image" in Table 4.

### [Table 3]

**Table 3**

| sample No. | cemented carbide | | | 1st phase | | | | |
|---|---|---|---|---|---|---|---|---|
| | 1st phase | Co | Ti,Ta, Nb,Zr | WC particles | | | | |
| | content | content | total content | arithmetic mean particle size a | standard deviation b | 10% cumulative particle size c | Formula I | Formula II |
| | vol% | mass% | mass% | µm | µm | µm | Yes/No | Yes/No |
| 1 | 65 | 14 | 7 | 0.50 | 0.30 | 0.28 | Yes | Yes |
| 2 | 85 | 4 | 3 | 0.80 | 0.44 | 0.39 | Yes | Yes |
| 3 | 78 | 5 | 4 | 1.00 | 0.53 | 0.47 | Yes | Yes |
| 4 | 77 | 5 | 4 | 1.20 | 0.60 | 0.53 | Yes | Yes |
| 5 | 79 | 5 | 4 | 1.60 | 0.73 | 0.68 | Yes | Yes |
| 6 | 78 | 5 | 4 | 2.00 | 0.95 | 0.81 | Yes | Yes |
| 7 | 84 | 3 | 4 | 1.20 | 0.62 | 0.54 | Yes | Yes |
| 8 | 81 | 4 | 4 | 1.40 | 0.69 | 0.62 | Yes | Yes |
| 9 | 78 | 6 | 4 | 1.10 | 0.58 | 0.51 | Yes | Yes |
| 10 | 75 | 9 | 4 | 1.10 | 0.57 | 0.50 | Yes | Yes |
| 11 | 71 | 11 | 4 | 1.30 | 0.66 | 0.56 | Yes | Yes |
| 12 | 66 | 15 | 4 | 1.40 | 0.69 | 0.60 | Yes | Yes |
| 13 | 80 | 5 | 2 | 1.20 | 0.60 | 0.53 | Yes | Yes |
| 14 | 78 | 5 | 5 | 1.40 | 0.67 | 0.61 | Yes | Yes |
| 15 | 72 | 5 | 8 | 1.10 | 0.57 | 0.52 | Yes | Yes |
| 16 | 77 | 5 | 4 | 1.20 | 0.60 | 0.53 | Yes | Yes |
| 17 | 79 | 5 | 4 | 1.20 | 0.61 | 0.53 | Yes | Yes |
| 18 | 79 | 5 | 4 | 1.20 | 0.59 | 0.53 | Yes | Yes |
| 19 | 80 | 5 | 4 | 1.20 | 0.58 | 0.54 | Yes | Yes |
| 20 | 79 | 5 | 4 | 1.20 | 0.62 | 0.55 | Yes | Yes |
| 21 | 78 | 5 | 4 | 1.20 | 0.61 | 0.53 | Yes | Yes |
| 22 | 81 | 5 | 4 | 1.20 | 0.60 | 0.54 | Yes | Yes |
| 101 | 62 | 16 | 8 | 1.20 | 0.60 | 0.53 | Yes | Yes |
| 102 | 88 | 2 | 3 | 1.20 | 0.61 | 0.54 | Yes | Yes |
| 103 | 79 | 3 | 4 | 0.40 | 0.29 | 0.20 | No | No |
| 104 | 77 | 14 | 4 | 2.10 | 1.12 | 0.79 | No | No |
| 105 | 76 | 14 | 4 | 1.30 | 0.73 | 0.51 | No | No |
| 106 | 76 | 14 | 4 | 1.40 | 0.82 | 0.54 | No | No |
| 107 | 85 | 2 | 4 | 1.10 | 0.58 | 0.49 | Yes | Yes |
| 108 | 54 | 20 | 4 | 1.30 | 0.65 | 0.58 | Yes | Yes |
| 109 | 82 | 14 | 1 | 1.30 | 0.67 | 0.57 | Yes | Yes |
| 110 | 70 | 5 | 10 | 1.40 | 0.70 | 0.61 | Yes | Yes |
| 111 | 84 | 2 | 2 | 0.50 | 0.61 | 0.53 | No | Yes |
| 112 | 70 | 16 | 7 | 2.00 | 0.56 | 0.53 | Yes | No |

### [Table 4]

**Table 4**

| sample No. | 2nd phase | 3rd phase | 1st image |
|---|---|---|---|
| | composition | composition | 2nd region arithmetic mean particle size d (µm) |
| 1 | Co | Ti,Ta,Nb,Zr,W,C,N | 0.9 |
| 2 | Co | Ti,Ta,Nb,Zr,W,C,N | 0.3 |
| 3 | Co | Ti,Ta,Nb,Zr,W,C,N | 0.5 |
| 4 | Co | Ti,Ta,Nb,Zr,W,C,N | 0.5 |
| 5 | Co | Ti,Ta,Nb,Zr,W,C,N | 0.6 |
| 6 | Co | Ti,Ta,Nb,Zr,W,C,N | 0.7 |
| 7 | Co | Ti,Ta,Nb,Zr,W,C,N | 0.4 |
| 8 | Co | Ti,Ta,Nb,Zr,W,C,N | 0.5 |
| 9 | Co | Ti,Ta,Nb,Zr,W,C,N | 0.5 |
| 10 | Co | Ti,Ta,Nb,Zr,W,C,N | 0.5 |
| 11 | Co | Ti,Ta,Nb,Zr,W,C,N | 0.6 |
| 12 | Co | Ti,Ta,Nb,Zr,W,C,N | 0.7 |
| 13 | Co | Ti,Ta,Nb,Zr,W,C,N | 0.4 |
| 14 | Co | Ti,Ta,Nb,Zr,W,C,N | 0.5 |
| 15 | Co | Ti,Ta,Nb,Zr,W,C,N | 0.6 |
| 16 | Co | Ti,Ta,Nb,Zr,W,C,N | 0.5 |
| 17 | Co | Ti,Ta,Nb,W,C,N | 0.5 |
| 18 | Co | Ti,W,C,N | 0.5 |
| 19 | Co | Ti,Ta,W,C,N | 0.5 |
| 20 | Co | Ti,Ta,C | 0.5 |
| 21 | Co | Ti,Ta,Zr,W,C,N | 0.5 |
| 22 | Co | Ti,W,C | 0.5 |
| 101 | Co | Ti,Ta,Nb,Zr,W,C,N | 0.9 |
| 102 | Co | Ti,Ta,Nb,Zr,W,C,N | 0.2 |
| 103 | Co | Ti,Ta,Nb,Zr,W,C,N | 0.3 |
| 104 | Co | Ti,Ta,Nb,Zr,W,C,N | 0.8 |
| 105 | Co | Ti,Ta,Nb,Zr,W,C,N | 0.8 |
| 106 | Co | Ti,Ta,Nb,Zr,W,C,N | 0.8 |
| 107 | Co | Ti,Ta,Nb,Zr,W,C,N | 0.2 |
| 108 | Co | Ti,Ta,Nb,Zr,W,C,N | 1.2 |
| 109 | Co | Ti,Ta,Nb,Zr,W,C,N | 0.7 |
| 110 | Co | Ti,Ta,Nb,Zr,W,C,N | 0.8 |
| 111 | Co | Ti,Ta,Nb,Zr,W,C,N | 0.2 |
| 112 | Co | Ti,Ta,Nb,Zr,W,C,N | 1.0 |

### <Cutting Test 1>

Using a cutting tool (tool model number: CNMG120408N-GU (manufactured by SUMITOMO ELECTRIC HARDMETAL CORP.)) of each sample, turning was performed under the following conditions, and the average depth of wear Vb (mm) on the flank side of the cutting tool after cutting for 15 minutes was measured. The cutting tool having a smaller average depth of wear Vb (mm) has a more excellent wear resistance and a longer tool life. In Cutting Test 1, it is determined that when the average depth of wear Vb (mm) is 0.35 mm or less, the wear resistance is excellent and the tool life is long. The results are indicated under the cell "Cutting Test 1" in Table 5.

### <<Cutting Conditions>>

Workpiece: S45C
Machining: turning the outer circumference of a round bar
Cutting speed: 350 m/min
Feed rate: 0.25 mm/rev
Depth of cut: 2.0 mm
Cutting fluid: water-soluble cutting oil
The above cutting conditions correspond to high-speed machining.

### <Cutting Test 2>

20 cutting tools (tool model number: CNMG120408N-GU (manufactured by SUMITOMO ELECTRIC HARDMETAL CORP.)) of each sample were prepared, turning was performed using these cutting tools under the following conditions, and the breakage ratio (%) when cutting was performed for 20 seconds was measured for each cutting tool. The cutting tool having a smaller breakage ratio has a more excellent chipping resistance and a longer tool life. In Cutting Test 2, it is determined that when the breakage ratio is 25% or less, the tool life is long. The results are indicated under the cell "Cutting Test 2" in Table 5.

### <<Cutting Conditions>>

Workpiece: SCM440 (a grooved round bar)
Machining: intermittently turning the outer circumference of a grooved round bar
Cutting speed: 120 m/min
Feed rate: 0.15 mm/rev
Depth of cut: 2.0 mm
Cutting fluid: None

In this example, it is determined that when the average depth of wear Vb is 0.35 mm or less in Cutting Test 1 and the breakage ratio is 25% or less in Cutting Test 2, the tool life is long.

### [Table 5]

**Table 5**

| sample No. | Cutting Test 1 | Cutting Test 2 |
|---|---|---|
| | average depth of wear Vb (mm) | breakage ratio (%) |
| 1 | 0.32 | 0 |
| 2 | 0.20 | 10 |
| 3 | 0.17 | 0 |
| 4 | 0.19 | 0 |
| 5 | 0.22 | 0 |
| 6 | 0.24 | 0 |
| 7 | 0.14 | 25 |
| 8 | 0.17 | 10 |
| 9 | 0.22 | 0 |
| 10 | 0.25 | 0 |
| 11 | 0.27 | 0 |
| 12 | 0.33 | 0 |
| 13 | 0.22 | 0 |
| 14 | 0.16 | 5 |
| 15 | 0.14 | 15 |
| 16 | 0.18 | 0 |
| 17 | 0.21 | 0 |
| 18 | 0.27 | 0 |
| 19 | 0.21 | 0 |
| 20 | 0.29 | 0 |
| 21 | 0.19 | 0 |
| 22 | 0.25 | 0 |
| 101 | 0.38 | 0 |
| 102 | 0.12 | 55 |
| 103 | 0.22 | 40 |
| 104 | 0.44 | 0 |
| 105 | 0.40 | 0 |
| 106 | 0.42 | 0 |
| 107 | 0.12 | 50 |
| 108 | 0.49 | 0 |
| 109 | 0.37 | 0 |
| 110 | 0.14 | 30 |
| 111 | 0.12 | 60 |
| 112 | 0.37 | 0 |

### <Analysis>

The cemented carbides and cutting tools of Samples 1 to 22 correspond to Examples. The cemented carbides and cutting tools of Samples 101 to 112 correspond to Comparative Examples. Samples 1 to 22 were excellent in wear resistance and chipping resistance, and exhibited a long tool life in both of Cutting Test 1 and Cutting Test 2. Samples 101, 104 to 106, 108, 109, and 112 were insufficient in wear resistance, and they were insufficient in tool life in Cutting Test 1. Samples 102, 103, 107, 110, and 111 were insufficient in chipping resistance, and they were insufficient in tool life in Cutting Test 2.

## Claims

1. A cemented carbide comprising a first phase, a second phase, and a third phase, wherein
the first phase consists of a plurality of tungsten carbide particles,
a content of the first phase in the cemented carbide is 65% by volume or more and 85% by volume or less, as measured using the method described in the description,
the tungsten carbide particles have an arithmetic mean particle size a of 0.5 µm or more and 2.0 µm or less,
the arithmetic mean particle size a and a particle size standard deviation b of the tungsten carbide particles have a relation defined by Formula I: $b < 0.49 a + 0.063$ Formula I
where a unit of a and b in Formula I is µm, the arithmetic mean particle size a is measured using the method described in the description, and the particle size standard deviation b is measured using the method described in the description,
the arithmetic mean particle size a and a number-based 10% cumulative particle size c of the tungsten carbide particles have a relation defined by Formula II: $c > 0.34 a + 0.098$ Formula II
where a unit of a and c in Formula II is µm and the number-based 10% cumulative particle size c is measured using the method described in the description,
the second phase is composed of cobalt,
a cobalt content in the cemented carbide is 3% by mass or more and 15% by mass or less, as measured using the method described in the description,
the third phase is composed of at least one element selected from the group consisting of titanium, tantalum, niobium, zirconium, and tungsten, and at least any of carbon and nitrogen,
the third phase comprises no tungsten carbide,
a total content of titanium, tantalum, niobium, and zirconium in the cemented carbide is 2% by mass or more and 8% by mass or less, as measured using the method described in the description,
in the cemented carbide, a percentage of a mass of chromium relative to a mass of cobalt is 0% or more and 8% or less, the percentage of the mass of chromium relative to the mass of cobalt being determined using the method described in the description, and
in the cemented carbide, a percentage of a mass of zirconium relative to the mass of cobalt is 0% or more and 6% or less, the percentage of the mass of zirconium relative to the mass of cobalt being determined using the method described in the description.

2. The cemented carbide according to claim 1, wherein
a first image obtained by binarization of a backscattered electron image of a cross section of the cemented carbide includes: a first region consisting of the first phase; and a second region consisting of the second phase and the third phase,
in the first image, the second region has an arithmetic mean particle size d of 0.3 µm or more and 0.9 µm or less, as measured using the method described in the description, and
the backscattered electron image is obtained by photographing the cross section of the cemented carbide with a scanning electron microscope at a magnification of 5000x.

3. The cemented carbide according to claim 1 or 2, wherein the tungsten carbide particles have an arithmetic mean particle size a of 0.8 µm or more and 1.6 µm or less.

4. The cemented carbide according to any one of claims 1 to 3, wherein the cobalt content in the cemented carbide is 4% by mass or more and 11% by mass or less.

5. A cutting tool comprising the cemented carbide according to any one of claims 1 to 4.

## Patentansprüche

1. Hartmetall, umfassend eine erste Phase, eine zweite Phase und eine dritte Phase, wobei
die erste Phase aus einer Vielzahl von Wolframcarbidpartikeln besteht,
ein Volumenanteil der ersten Phase im Hartmetall 65 Vol.-% oder mehr und 85 Vol.-% oder weniger beträgt, gemessen mittels des in der Beschreibung beschriebenen Verfahrens,
die Wolframcarbidpartikel eine arithmetische mittlere Partikelgröße a von 0,5 µm oder mehr und 2,0 µm oder weniger aufweisen,
die arithmetische mittlere Partikelgröße a und eine Standardabweichung b der Partikelgröße der Wolframcarbidpartikel in einer durch Formel I definierten Beziehung stehen: $b < 0 , 49 a + 0 , 063$ Formel I
wobei die Einheit von a und b in Formel I µm ist, die arithmetische mittlere Partikelgröße a mittels des in der Beschreibung beschriebenen Verfahrens gemessen wird und die Standardabweichung b der Partikelgröße mittels des in der Beschreibung beschriebenen Verfahrens gemessen wird,
die arithmetische mittlere Partikelgröße a und eine zahlenbezogene kumulative 10-%-Partikelgröße c der Wolframcarbidpartikel in einer durch Formel II definierten Beziehung stehen: $c > 0 , 34 a + 0 , 098$ Formel II
wobei die Einheit von a und c in Formel II µm ist und die zahlenbezogene kumulative 10-%-Partikelgröße c mittels des in der Beschreibung beschriebenen Verfahrens gemessen wird,
die zweite Phase aus Kobalt besteht,
ein Kobaltgehalt im Hartmetall 3 Massen-% oder mehr und 15 Massen-% oder weniger beträgt, gemessen mittels des in der Beschreibung beschriebenen Verfahrens,
die dritte Phase aus wenigstens einem Element, ausgewählt aus der Gruppe bestehend aus Titan, Tantal, Niob, Zirkonium und Wolfram, und wenigstens irgendeinem von Kohlenstoff und Stickstoff besteht,
die dritte Phase kein Wolframcarbid umfasst,
ein Gesamtgehalt an Titan, Tantal, Niob und Zirkonium im Hartmetall 2 Massen-% oder mehr und 8 Massen-% oder weniger beträgt, gemessen mittels des in der Beschreibung beschriebenen Verfahrens,
im Hartmetall ein prozentualer Anteil der Chrommasse bezogen auf die Kobaltmasse 0 % oder mehr und 8 % oder weniger beträgt, wobei der prozentuale Anteil der Chrommasse bezogen auf die Kobaltmasse mittels des in der Beschreibung beschriebenen Verfahrens bestimmt wird, und
im Hartmetall ein prozentualer Anteil der Zirkoniummasse bezogen auf die Kobaltmasse 0 % oder mehr und 6 % oder weniger beträgt, wobei der prozentuale Anteil der Zirkoniummasse bezogen auf die Kobaltmasse mittels des in der Beschreibung beschriebenen Verfahrens bestimmt wird.

2. Hartmetall nach Anspruch 1, wobei
ein erstes Bild, das durch Binarisierung eines Rückstreuelektronenbildes eines Querschnitts des Hartmetalls erhalten wird, Folgendes umfasst: einen ersten Bereich, der aus der ersten Phase besteht; und einen zweiten Bereich, der aus der zweiten Phase und der dritten Phase besteht,
in dem ersten Bild der zweite Bereich eine arithmetische mittlere Partikelgröße d von 0,3 µm oder mehr und 0,9 µm oder weniger aufweist, gemessen mittels des in der Beschreibung beschriebenen Verfahrens, und
das Rückstreuelektronenbild durch fotografisches Aufnehmen des Querschnitts des Hartmetalls mit einem Rasterelektronenmikroskop bei einer 5000-fachen Vergrößerung erhalten wird.

3. Hartmetall nach Anspruch 1 oder 2, wobei die Wolframcarbidpartikel eine arithmetische mittlere Partikelgröße a von 0,8 µm oder mehr und 1,6 µm oder weniger aufweisen.

4. Hartmetall nach einem der Ansprüche 1 bis 3, wobei der Kobaltgehalt im Hartmetall 4 Massen-% oder mehr und 11 Massen-% oder weniger beträgt.

5. Schneidwerkzeug, umfassend das Hartmetall nach einem der Ansprüche 1 bis 4.

## Revendications

1. Carbure cémenté comprenant une première phase, une deuxième phase, et une troisième phase, dans lequel
la première phase se compose d'une pluralité de particules de carbure de tungstène,
une teneur en la première phase dans le carbure cémenté est de 65 % en volume ou plus et de 85 % en volume ou moins, telle que mesurée en utilisant la méthode décrite dans la description,
les particules de carbure de tungstène ont une taille moyenne arithmétique de particule a de 0,5 µm ou plus et de 2,0 µm ou moins,
la taille moyenne arithmétique de particule a et un écart-type de taille de particule b des particules de carbure de tungstène ont une relation définie par la formule I : $b < 0 , 49 a + 0 , 063$ Formule I
où une unité de a et b dans la formule I est le µm, la taille moyenne arithmétique de particule a est mesurée en utilisant la méthode décrite dans la description, et l'écart-type de taille de particule b est mesuré en utilisant la méthode décrite dans la description,
la taille moyenne arithmétique de particule a et une taille de particule cumulée à 10 % en nombre c des particules de carbure de tungstène ont une relation définie par la formule II : $c > 0 , 34 a + 0 , 098$ Formule II
où une unité de a et c dans la formule II est le µm et la taille de particule cumulée à 10 % en nombre c est mesurée en utilisant la méthode décrite dans la description,
la deuxième phase est composée de cobalt,
une teneur en cobalt dans le carbure cémenté est de 3 % en masse ou plus et de 15 % en masse ou moins, telle que mesurée en utilisant la méthode décrite dans la description,
la troisième phase est composée d'au moins un élément choisi dans le groupe consistant en titane, tantale, niobium, zirconium, et tungstène, et au moins l'un quelconque parmi carbone et azote,
la troisième phase ne comprend aucun carbure de tungstène,
une teneur totale en titane, tantale, niobium, et zirconium dans le carbure cémenté est de 2 % en masse ou plus et de 8 % en masse ou moins, telle que mesurée en utilisant la méthode décrite dans la description,
dans le carbure cémenté, un pourcentage d'une masse de chrome par rapport à une masse de cobalt est de 0 % ou plus et de 8 % ou moins, le pourcentage de la masse de chrome par rapport à la masse de cobalt étant déterminé en utilisant la méthode décrite dans la description, et
dans le carbure cémenté, un pourcentage d'une masse de zirconium par rapport à la masse de cobalt est de 0 % ou plus et de 6 % ou moins, le pourcentage de la masse de zirconium par rapport à la masse de cobalt étant déterminé en utilisant la méthode décrite dans la description.

2. Carbure cémenté selon la revendication 1, dans lequel
une première image obtenue par binarisation d'une image en électrons rétrodiffusés d'une section transversale du carbure cémenté comprend : une première région consistant en la première phase ; et une deuxième région consistant en la deuxième phase et la troisième phase,
sur la première image, la deuxième région a une taille moyenne arithmétique de particule d de 0,3 µm ou plus et de 0,9 µm ou moins, telle que mesurée en utilisant la méthode décrite dans la description, et
l'image en électrons rétrodiffusés est obtenue en photographiant la section transversale du carbure cémenté avec un microscope électronique à balayage à un grossissement de 5000 x.

3. Carbure cémenté selon la revendication 1 ou 2, dans lequel les particules de carbure de tungstène ont une taille moyenne arithmétique de particule a de 0,8 µm ou plus et de 1,6 µm ou moins.

4. Carbure cémenté selon l'une quelconque des revendications 1 à 3, dans lequel la teneur en cobalt dans le carbure cémenté est de 4 % en masse ou plus et de 11 % en masse ou moins.

5. Outil de coupe comprenant le carbure cémenté selon l'une quelconque des revendications 1 à 4.
